# EUROPÄISCHE PATENTSCHRIFT

(11) **EP 0 464 262 B1**
(45) Veröffentlichungstag und Bekanntmachung des Hinweises auf die Patenterteilung: **03.08.1994**
(21) Anmeldenummer: 90124669.4
(22) Anmeldetag: 19.12.1990
(51) Int. Cl.: G01D 15/24

(54) **Schreibeinrichtung**
Writing device
Dispositif d'écriture

(30) Priorität: 06.07.1990 DE 4021597
(43) Veröffentlichungstag der Anmeldung: 08.01.1992
(73) Patentinhaber: SENSYCON GESELLSCHAFT FÜR INDUSTRIELLE SENSORSYSTEME UND PROZESSLEITTECHNIK MBH, 30179 Hannover (DE)
(72) Erfinder: Thönebe, Werner, W-3013 Barsinghausen 9 (DE); Friedemann, Dieter, W-3006 Burgwedel 1 (DE)
(74) Vertreter: Meissner, Peter E., Dipl.-Ing.

(56) Entgegenhaltungen:
- DE-A- 2 923 537
- GB-A- 2 137 968
- US-A- 4 577 409

## Beschreibung

Die Erfindung betrifft eine Schreibeinrichtung mit einem parallel zu einer Aufzeichnungsrolle auf einer Führung verfahrbaren, eine Schreibfeder tragenden Schlitten, welcher mit einem Schleifer gegen eine parallel zur Führung verlaufende Potentiometerbahn anliegt. Schreibeinrichtungen dieser Art werden als Prozeßschreiber eingesetzt und sind deshalb bekannt.

Aus der DE-A-2 923 537 ist eine Schreibeinrichtung der gattungsgemäßen Art bekannt.

Bei der bekannten Schreibeinrichtung besteht die Führung nachteiligerweise aus zwei parallel zueinander verlaufenden, zylindrischen Führungsstäben, auf denen der Schlitten mit Lagerbuchsen gehalten ist. Nachteilig hierbei ist, daß die Führungsstäbe und Lagerbuchsen relativ großen Belastungen ausgesetzt sind. Diese Belastungen setzen sich zusammen aus den statischen Kräften, die durch den Schleiferandruck und das Eigengewicht des Schlittens erzeugt werden und den dynamischen Kräften, die beim Verfahren des Schlittens durch auftretende Reibmomente entstehen.

Der Erfindung liegt die Aufgabe zugrunde, eine Schreibeinrichtung der eingangs genannten Art so auszubilden, daß ihr Schlitten möglichst einfach aufgebaut und mit möglichst geringen Reibkräften verschiebbar ist.

Diese Aufgabe wird erfindungsgemäß durch eine Schreibeinrichtung mit den Merkmalen gemäß Anspruch 1 gelöst.

Durch diese Gestaltung wird der Schlitten weit geringeren Kräften ausgesetzt als bei einer Führung mit zwei Führungsstangen. Die erfindungsgemäße Schreibeinrichtung kann deshalb sehr gewichtsarm ausgeführt werden, so daß sowohl die statischen als auch die dynamischen, auf die Führungstange wirkenden Kräfte sehr gering sind. Durch den Fortfall einer Führungsstange ist die erfindungsgemäße Schreibeinrichtung einfacher aufgebaut als die bisher bekannte Schreibeinrichtung und deshalb kostengünstiger herzustellen.

Der Schlitten ist trotz des Fortfalls einer Führungsstange gegen ein Kippen nach oben oder unten durch die Leiterplatte gesichert, da er zangenartig mit einem Schenkel über eine die Potentiometerbahn tragende Leiterplatte und mit einem anderen Schenkel unter diese Leiterplatte greift. Die federnde Vorspannung, mit der der Schleifer an der Potentiometerbahn anliegt, kompensiert gleichzeitig durch Abrieb entstehenden möglichen Verschleiß an Potentiometerbahn, Schleifer und zweitem Schenkel des Schlittens.

Zur Minderung des Bauaufwandes trägt es bei, wenn die die Potentiometerbahn tragende Trägerplatte eine Leiterplatte ist.

Konstruktiv besonders einfach ist die Schreibeinrichtung gestaltet, wenn auf der Unterseite der Leiterplatte parallel zu der von dem Schleifer kontaktierten Potentiometerbahn eine von einem weiteren, am ersten Schenkel angeordneten Schleifer kontaktierten Kollektorbahn vorgesehen ist.

Ist ein sich parallel zur Führungsstange erstreckendes, den Schlitten antreibendes Zugseil an einem Befestigungspunkt zwischen der Führungsstange und der Potentiometerbahn am Schlitten befestigt, so wird der Schlitten weitgehnd frei von Verdrehung auf der Führungsstange geführt. Dies insbesondere, wenn der Befestigungspunkt an der Stelle des Schlittens angeordnet ist, an der die Summe der auf den Schlitten einwirkenden Momente etwa Null ist. Solche Momente ergeben sich zum Beispiel durch die Reibkräfte der Schreibfeder auf der Aufzeichnungsrolle, durch die Reibkräfte der Schleifer auf Potentiometerbahn und Kollektorbahn sowie der Reibung des Schlittens auf der Führungsstange. Damit werden die Lagerbuchsen, mit denen der Schlitten auf der Führungsstange angeordnet ist, weitgehend nur durch das Eigengewicht des Schlittens belastet. Gleichzeitig werden die Anforderungen an die Abriebfestigkeit der Lagerbuchsen erheblich reduziert, so daß diese einfacher und preisgünstiger ausgebildet werden können.

Ist der Befestigungspunkt quer zur Bewegungsrichtung des Schlittens verstellbar, so kann der Befestigungspunkt exakt in die Position eingestellt werden, in der die Summe der Momente genau Null ist. Dies ermöglicht auch eine Nachjustage bei Änderung der Reibungsverhältnisse.

Die Erfindung läßt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: eine Draufsicht auf einen für die Erfindung wesentlichen Bereich einer erfindungsgemäßen Schreibeinrichtung,
- Fig. 2: eine Seitenansicht eines Schlittens der Schreibeinrichtung mit den angrenzenden Bauteilen.

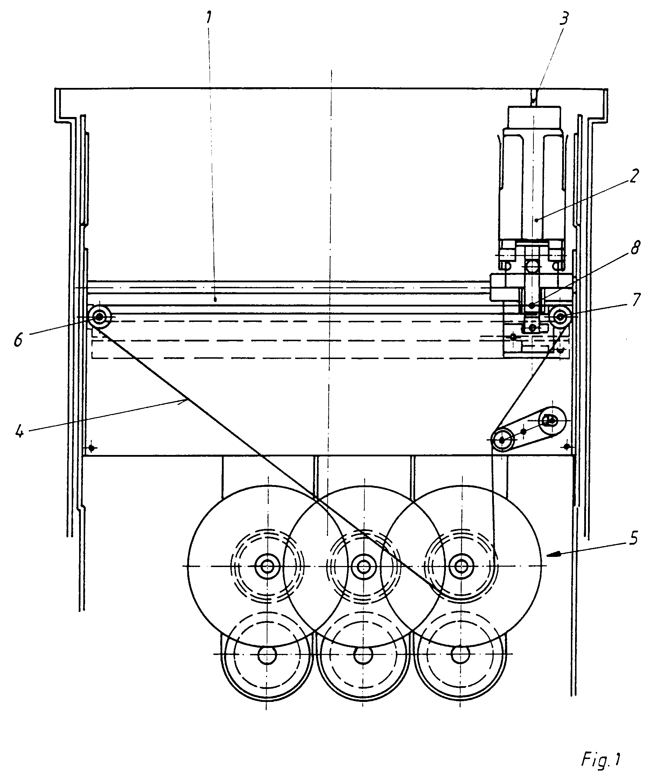

Die in Figur 1 gezeigte Schreibeinrichtung hat eine zylindrische Führungsstange 1, auf der ein Schlitten 2 verschieblich geführt ist. Dieser Schlitten 2 trägt an seiner vorderen Seite eine Schreibfeder 3. Angetrieben wird der Schlitten 2 von einem Zugseil 4, welches von einem Rädergetriebe 5 zur einen oder anderen Seite bewegt werden kann und über jeweils eine gehäusefeste Umlenkrolle 6, 7 zu einem Befestigungspunkt 8 am Schlitten 2 geführt ist.

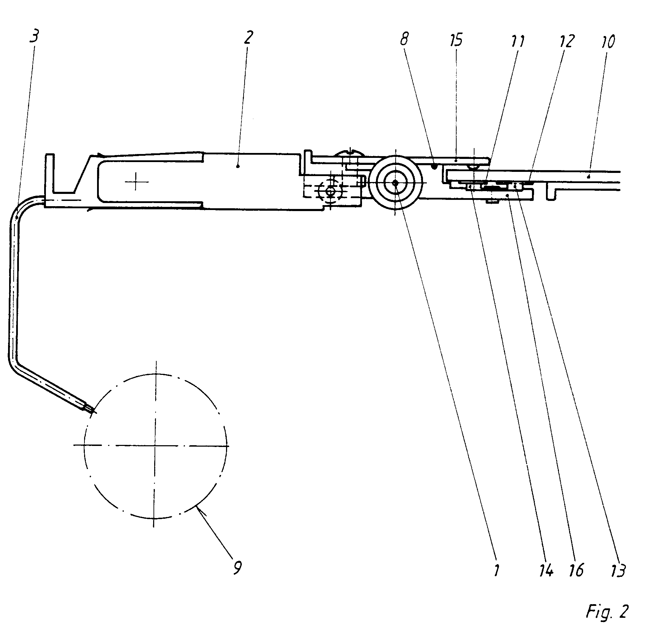

Die Figur 2 zeigt den auf der Führungsstange 1 geführten Schlitten 2 von der Seite. Strichpunktiert gezeigt ist eine Aufzeichnungsrolle 9, gegen die die Spitze der Schreibfeder 3 anliegt. Auf der der Schreibfeder 3 gegenüberliegenden Seite der Führungsstange 1 ist eine Trägerplatte 10 angeordnet, welche auf ihrer Unterseite nebeneinander eine Potentiometerbahn 11 und eine Kollektorbahn 12 hat, gegen die jeweils ein Schleifer 13, 14 des Schlittens 2 anliegt. Der Schlitten 2 greift hierzu zangenartig auf der der Schreibfeder 3 gegenüberliegenden Seite mit einen oberen Schenkel 15 und einem unteren Schenkel 16 über bzw. unter die Trägerplatte 10. Der untere Schenkel 16 trägt die beiden Schleifer 13, 14. Die Figur 2 läßt weiterhin erkennen, daß der Befestigungspunkt 8 für das in Figur 1 gezeigte Zugseil 4 zwischen der Leiterplatte 10 und der Führungsstange 1 vorgesehen ist.

## Patentansprüche

1. Schreibeinrichtung mit einem parallel zu einer Aufzeichnungsrolle auf einer Führung verfahrbaren, eine Schreibfeder (3) tragenden Schlitten (2), welcher mit einem Schleifer (14) gegen eine parallel zur Führung verlaufende Potentiometerbahn (11) anliegt, dadurch gekennzeichnet, daß die Führung durch eine einzige, im Querschnitt kreisförmige Führungsstange (1) erfolgt und der Schlitten (2) an der der Schreibfeder (3) gegenüberliegenden Seite der Führungsstange (1) zangenartig mit einem ersten Schenkel (15) über eine die Potentiometerbahn (11) tragende Trägerplatte (10) und mit einem zweiten Schenkel (16) unter diese Trägerplatte (10) greift, wobei der an dem zweiten Schenkel (16) angeordnete Schleifer (14) unter federnder Vorspannung an der an der Unterseite der Trägerplatte (10) angeordneten Potentiometerbahn (11) in Anlage ist, und ein sich parallel zur Führungsstange erstreckendes, den Schlitten (2) antreibendes Zugseil (4) an einem Befestigungspunkt (8) zwischen der Führungsstange (1) und der Potentiometerbahn (11) am Schlitten (2) befestigt ist.

2. Schreibeinrichtung nach Anspruch 1, dadurch gekennzeichnet, daß die die Potentiometerbahn (11) tragende Trägerplatte (10) eine Leiterplatte ist.

3. Schreibeinrichtung nach den Ansprüchen 1 oder 2, dadurch gekennzeichnet, daß auf der Unterseite der Leiterplatte (10) parallel zu der von einem Schleifer (14) kontaktierten Potentiometerbahn (11) eine von einem weiteren, am zweiten Schenkel (16) angeordneten Schleifer (13) kontaktierte Kollektorbahn (12) vorgesehen ist.

4. Schreibeinrichtung nach Anspruch 3, dadurch gekennzeichnet, daß der Befestigungspunkt (8) an der Stelle des Schlittens (2) angeordnet ist, an der die Summe der auf den Schlitten (2) einwirkenden Momente etwa Null ist.

5. Schreibeinrichtung nach Anspruch 4, dadurch gekennzeichnet, daß der Befestigungspunkt (8) quer zur Bewegungsrichtung des Schlittens (2) verstellbar ist.

## Claims

1. Writing device with a carriage (2) which can travel parallel to a recording roll on a guide, carries a pen (3) and bears by way of a slider (14) against a potentiometer track (11) extending parallel to the guide, characterised in that the guide is in the form of a single guide bar (1), which has a circular cross section, and the carriage (2) engages with a first leg (15) over a support plate (10) carrying the potentiometer track (11) and with a second leg (16) under this support plate (10) in the manner of tongs on the side which is opposite the pen (3), the slider (14) disposed on the second leg (16) bearing with initial spring stress against the potentiometer track (11) disposed on the underside of the support plate (10), and a traction cable (4), which extends parallel to the guide bar and drives the carriage (2), is attached to an attachment point (8) between the guide bar (1) and the potentiometer track (11) on the carriage (2).

2. Writing device according to claim 1, characterised in that the support plate (10) carrying the potentiometer track (11) is a printed circuit board.

3. Writing device according to claim 1 or 2, characterised in that a collector track (12) which is contacted by a further slider (13) disposed on the second leg (16) is provided on the underside of the printed circuit board (10) parallel to the potentiometer track (11) which is contacted by a slider (14).

4. Writing device according to claim 3, characterised in that the attachment point (8) is disposed at the location on the carriage (2) at which the sum of the torques acting on the carriage (2) is approximately zero.

5. Writing device according to claim 4, characterised in that the attachment point (8) can be displaced transversely to the direction of movement of the carriage (2).

## Revendications

1. Dispositif d'écriture, comportant un chariot (2) déplaçable parallèlement à un rouleau d'enregistrement sur un guide et portant un stylet (3), lequel chariot, par un curseur (14), repose contre une voie potentiométrique (11) s'étendant parallèlement au guide,
caractérisé en ce que le guide est constitué par une barre de guidage unique (1), de section transversale circulaire, et le chariot (2) s'engage sur le côté, opposé au stylet (3), de la barre de guidage (1), à la façon d'une pince, par une première branche (15), au-dessus d'une plaque de support (10) portant la voie potentiométrique (11) et, par une seconde branche (16), au-dessous de cette plaque de support (10), le curseur (14) agencé sur la seconde branche (16) étant en appui, sous une précontrainte élastique, contre la voie potentiométrique (11) agencée sur le dessous de la plaque de support (10), et un câble de traction (4) s'étendant parallèlement à la barre de guidage et entraînant le chariot (2) étant fixé, à un point de fixation (8) entre la barre de guidage (1) et la voie potentiométrique (11), sur le chariot (2).

2. Dispositif d'écriture selon la revendication 1,
caractérisé en ce que la plaque de support (10) portant la voie potentiométrique (11) est une plaque conductrice.

3. Dispositif d'écriture selon les revendications 1 ou 2,
caractérisé en ce que, sur le dessous de la plaque conductrice (10), parallèlement à la voie potentiométrique (11) en contact avec un curseur (14), il est prévu une voie collectrice (12) en contact avec un autre curseur (13) agencé sur la seconde branche (16).

4. Dispositif d'écriture selon la revendication 3,
caractérisé en ce que le point de fixation (8) est agencé à l'endroit du chariot (2), auquel la somme des moments agissant sur le chariot (2) est sensiblement nulle.

5. Dispositif d'écriture selon la revendication 4,
caractérisé en ce que le point de fixation (8) peut être réglé transversalement à la direction de déplacement du chariot (2).
